(19) Europäisches Patentamt / European Patent Office / Office européen des brevets

(11) **EP 2 557 861 A1**

(12) **EUROPEAN PATENT APPLICATION**
published in accordance with Art. 153(4) EPC

(43) Date of publication:
**13.02.2013 Bulletin 2013/07**

(51) Int Cl.:
**H04W 52/18** (2009.01)    **H04W 16/28** (2009.01)
**H04W 52/08** (2009.01)

(21) Application number: **11765609.0**

(22) Date of filing: **30.03.2011**

(86) International application number:
**PCT/JP2011/057965**

(87) International publication number:
**WO 2011/125709 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2010   JP 2010087266**

(71) Applicant: **NTT DOCOMO, INC.**
**Chiyoda-ku**
**Tokyo 100-6150 (JP)**

(72) Inventors:
• **NISHIKAWA, Daisuke**
  **Tokyo 100-6150 (JP)**
• **KISHIYAMA, Yoshihisa**
  **Tokyo 100-6150 (JP)**
• **KAWAMURA, Teruo**
  **Tokyo 100-6150 (JP)**

(74) Representative: **HOFFMANN EITLE**
**Patent- und Rechtsanwälte**
**Arabellastrasse 4**
**81925 München (DE)**

(54) **RADIO BASE STATION APPARATUS AND TRANSMISSION POWER CONTROL METHOD**

(57)    The present invention provides a radio base station apparatus and a transmission power control method that do not deteriorate the uplink reception quality of cell-edge users when uplink MU-MIMO transmission is applied. The transmission power control method of the present invention includes the steps of: in a radio base station apparatus that performs space division multiplexing between users by uplink MU-MIMO transmission: controlling transmission power according to a number of MU-MIMO multiplexed users; and transmitting transmission power information to match the number of MU-MIMO multiplexed users; and in a mobile terminal apparatus: setting transmission power using the transmission power information; and transmitting an uplink signal by the transmission power.

FIG. 7

**Description**

Technical Field

The present invention relates to a radio base station apparatus and a transmission power control method to control transmission power when uplink MU-MIMO (Multi-User Multi-Input Multi-Output) is applied.

Background Art

In the LTE (Long Term Evolution) system defined in 3GPP (3rd Generation Partnership Project), SC-FDMA (Single-Carrier Frequency Division Multiple Access) is employed on the uplink, which realizes a low peak-to-average power ratio (PAPR) and which is effective to increase coverage. Consequently, by means of scheduling at a radio base station apparatus (BS: Base Station), basically, radio resources of a certain frequency and time are allocated to one mobile terminal apparatus (UE: User Equipment), and therefore the users in the same cell are orthogonal to each other in the frequency and time domains. However, the LTE system is based on one-cell frequency repetition, and therefore there is significant interference from the surrounding cells, and, in particular, the interference level from UEs located at cell edges is high. Consequently, to compensate for such surrounding-cell interference and maintain certain reception quality, a measure against inter-cell interference becomes necessary.

Uplink transmission power control plays a significant role as a measure against inter-cell interference, and a radio base station apparatus is demanded to control the transmission power of a mobile terminal apparatus, to satisfy required reception quality, by taking into account the propagation loss between the user and the radio base station apparatus and the interference against the surrounding cells. In the LTE system, fractional transmission power control is employed as a transmission power control method to take inter-cell interference into account.

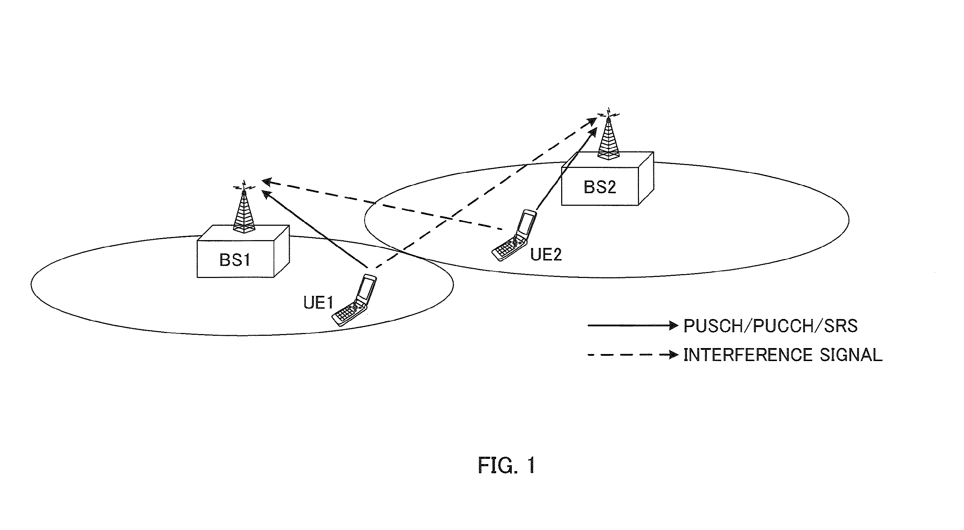

Signals to transmit on the uplink of the LTE system (PUSC (Physical Uplink Shared Channel), PUCCH (Physical Uplink Control Channel), SRS (Sounding Reference Signal) and so on) become desired signals if a mobile terminal apparatus is under a cell (for example, the signal from UE 1 to BS 1 and the signal from UE 2 to BS 2 in FIG. 1), but become interference signals if the mobile terminal apparatus is not under a cell (for example, the signal from UE 1 to BS 2 and the signal from UE 2 to BS 1 in FIG. 1).

The transmission power of such uplink signals is controlled by the combination of open loop control, which is based on parameters reported from a radio base station apparatus in a comparatively long cycle and the propagation loss measured by the mobile terminal apparatus, and closed loop control, which is based on TPC commands reported from a radio base station apparatus in a comparatively short cycle based on the situation of communication between the radio base station apparatus and a mobile terminal apparatus (for example, the received SINR (Signal to Interference plus Noise Ratio) at the radio base station apparatus). To be more specific, the transmission power of the PUSCH is given by following equation 1 (non-patent literature 1).

$$P_{PUSCH}(i) = \min\{P_{MAX},\ 10\log_{10}(M_{PUSCH}(i)) + P_{0\_PUSCH}(j) + \alpha \cdot PL + \Delta_{TF}(i) + f(i)\}$$

$$\dots \text{(Equation 1)}$$

This fractional transmission power control can reduce inter-cell interference by setting the target received power according to the propagation loss PL of a mobile terminal apparatus (which is realized by the open loop control parameter $\alpha$).

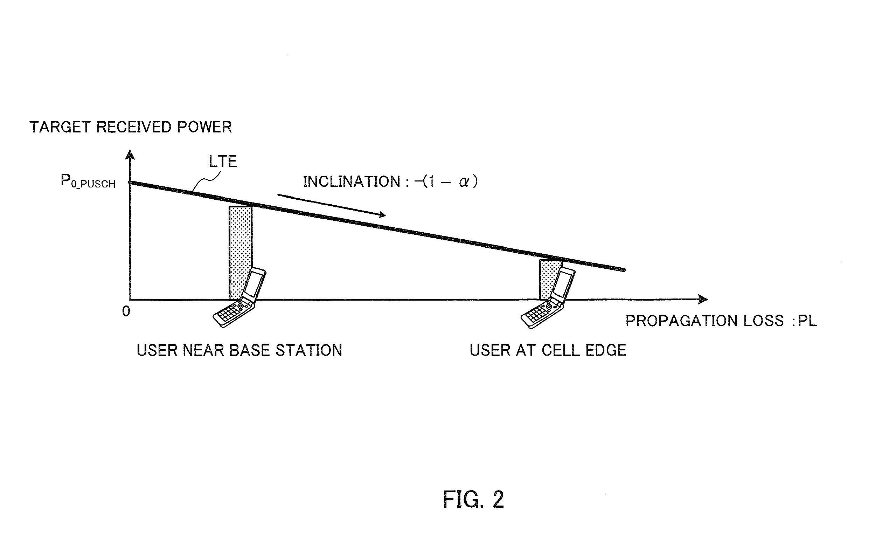

FIG. 2 is a diagram for explaining fractional transmission power control. In FIG. 2, the vertical axis represents the target received power ($P_{O\_PUSCH}$), and the horizontal axis represents propagation loss (PL). Fractional transmission power control is designed to make the target received power of mobile terminal apparatuses that are present at cell edges lower, for the purpose of suppressing inter-cell interference. That is to say, when the propagation loss (PL) is high, it is likely that the user is present at a cell edge, and, when the propagation loss is low, it is likely that the user is present near a radio base station apparatus, so that the target received power of a mobile terminal apparatus of a user near a radio base station apparatus is made relatively high, and the target received power of a mobile terminal apparatus of a user at a cell edge is made relatively low. The inclination of the primary characteristic line to show such relationship is -(1-$\alpha$).

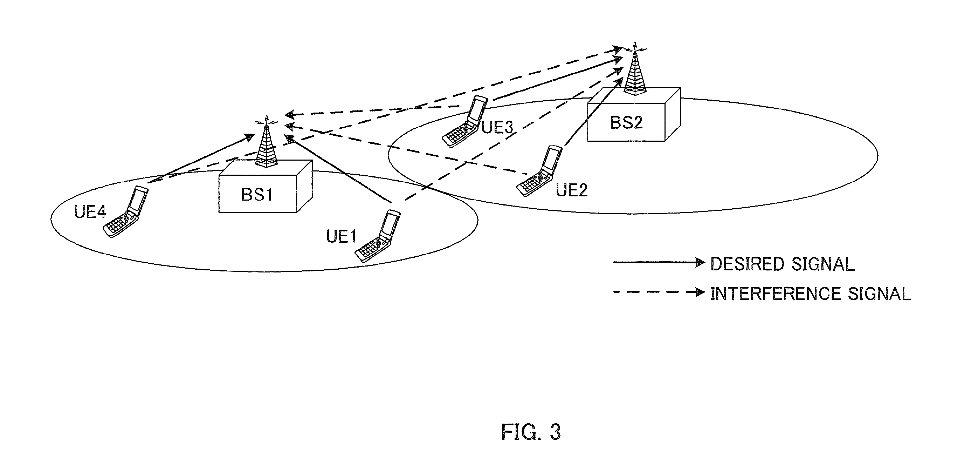

Meanwhile, in the LTE system, as a technique to increase the capacity of the uplink, MU-MIMO transmission is drawing attention and expectation. MU-MIMO transmission is a technique of improving the spectral efficiency dramatically by multiplexing signals of a plurality of users in frequency/time. In this case, too, desired signals are provided if a mobile terminal apparatus is under a cell (for example, the signal from UE 1 or UE 4 to BS 1 and the signal from UE 2 or UE 3 to BS 2 in FIG. 3), but, if the mobile terminal apparatus is not under a cell, interference signals are provided (for example, the signal from UE 1 or UE 4 to BS 2 and the signal from UE 2 or UE 3 to BS 1 in FIG. 1).

Citation List

Non-Patent Literature

Non-Patent Literature 1: 3GPP, TS36.213, V8.7.0, "Evolved Universal Terrestrial Radio Access (E-UTRA); Physical layer procedures"

Summary of Invention

Technical Problem

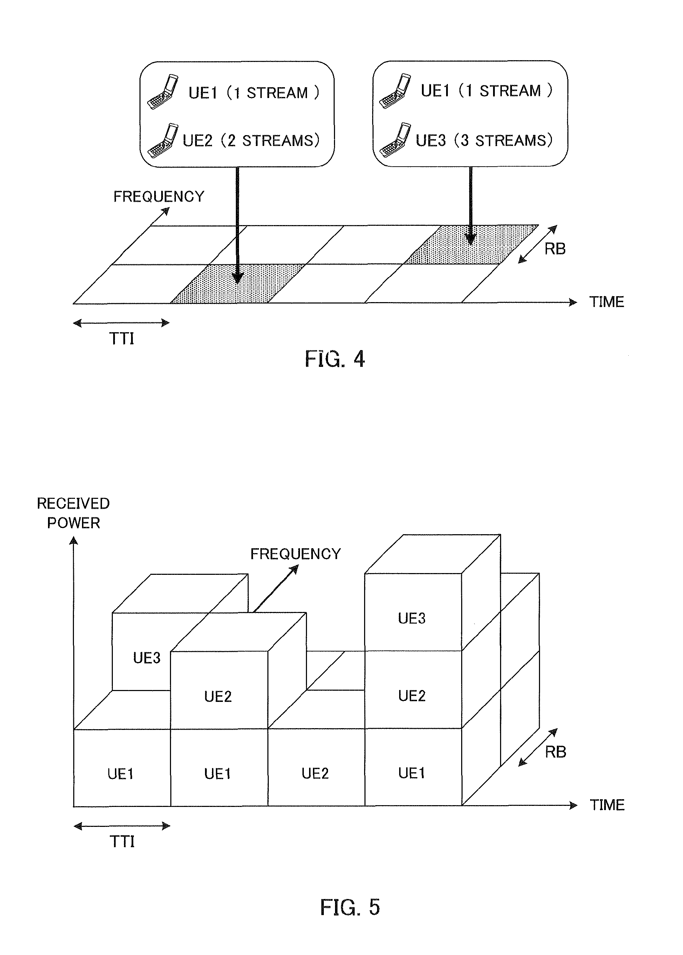

For the purpose of maximizing capacity, generally, a radio base station apparatus performs frequency scheduling (in minimum 1 RB (Resource Block) units) based on the uplink reception quality of each user, as shown in FIG. 4, and selects, adaptively, the combination of users to multiplex when MU-MIMO transmission is applied. This frequency scheduling is performed in minimum 1-TTI (Transmission Time Interval) cycle. Consequently, when MU-MIMO transmission is applied, it may happen that the number of users to multiplex varies per 1 RB and 1 TTI.

In conventional fractional transmission power control, fixed transmission power is set regardless of the number of MU-MIMO multiplexed users. Consequently, in the event MU-MIMO transmission is applied, as shown in FIG. 5, differences are produced in the received power at a radio base station apparatus, per 1 RB and 1 TTI. When differences are produced in the received power at a radio base station apparatus, for example, the problem of increased surrounding-cell interference, and the problem of producing significant fluctuation of surrounding-cell interference over time in adaptive resource control based on interference information prior to control delay, are raised. These problems in particular deteriorate the uplink reception quality of cell-edge users and damage the coverage.

The present invention is made in view of above problems, and it is therefore an object of the present invention to provide a radio base station apparatus and a transmission power control method that do not deteriorate the uplink reception quality of cell-edge users when uplink MU-MIMO transmission is applied.

Solution to Problem

A radio base station apparatus of the present invention performs space division multiplexing between users by uplink MU-MIMO transmission, and includes: a transmission power control section that controls transmission power according to a number of MU-MIMO multiplexed users; and a transmission section that transmits transmission power information to match the number of MU-MIMO multiplexed users.

A transmission power control method of the present invention includes the steps of: in a radio base station apparatus that performs space division multiplexing between users by uplink MU-MIMO transmission: controlling transmission power according to a number of MU-MIMO multiplexed users; and transmitting transmission power information to match the number of MU-MIMO multiplexed users; and in a mobile terminal apparatus: setting transmission power using the transmission power information; and transmitting an uplink signal by the transmission power.

Advantageous Effects of Invention

According to the transmission power control of the present invention, transmission power is controlled according to the number of MU-MIMO multiplexed users and transmission power information to match that number of MU-MIMO multiplexed users is transmitted, so that the uplink reception quality of cell-edge users is not deteriorated when uplink MU-MIMO transmission is applied.

Brief Description of Drawings

FIG. 1 is a diagram for explaining the uplink in the LTE system;
FIG. 2 is a diagram for explaining fractional transmission power control;
FIG. 3 is a diagram for explaining MU-MIMO transmission;
FIG. 4 is a diagram for explaining the selection of combinations of users to multiplex when MU-MIMO transmission is applied;
FIG. 5 is a diagram for explaining a problem with fractional transmission power control when MU-MIMO transmission is applied;

FIG. 6 is a diagram showing an example of TPC command format to use in the transmission power control the first method according to the present invention;

FIG. 7 is a flowchart for explaining the transmission power control of the first method according to the present invention;

FIG. 8 is a diagram for explaining the transmission power control of the second method according to the present invention;

FIG. 9 is a diagram for explaining the transmission power control of the second method;

FIG. 10 is a diagram showing a configuration of a radio communication system having a radio base station apparatus and a mobile terminal apparatus according to an embodiment of the present invention;

FIG. 11 is a block diagram showing a schematic configuration of a radio base station apparatus according to an embodiment of the present invention;

FIG. 12 is a block diagram showing a configuration of a baseband signal processing section in the radio base station apparatus shown in FIG. 11;

FIG. 13 is a block diagram showing a configuration of a transmission power control section according to embodiment 1, in the baseband signal processing section shown in FIG. 12;

FIG. 14 is a block diagram showing a schematic configuration of a mobile terminal apparatus according to an embodiment of the present invention;

FIG. 15 is a block diagram showing a configuration of a baseband signal processing section according to embodiment 1, in the mobile terminal apparatus shown in FIG. 14;

FIG. 16 is a block diagram showing a configuration of a transmission power control section according to embodiment 2, in the baseband signal processing section shown in FIG. 12; and

FIG. 17 is a block diagram showing a configuration of a baseband signal processing section according to embodiment 2, in the mobile terminal apparatus shown in FIG. 14.

Description of Embodiments

Now, embodiments of the present invention will be described below in detail with reference to the accompanying drawings. The present invention has a feature of controlling transmission power according to the number of MU-MIMO multiplexed users, in fractional transmission power control. That is to say, in the event uplink MU-MIMO transmission is applied, if fractional transmission power control is executed without considering the number of MU-MIMO multiplexed users, as shown in FIG. 5, the fluctuation of received power at a radio base station apparatus per 1 RB and 1 TTI becomes greater. Consequently, the surrounding-cell interference increases, and, by this means, in adaptive resource control, significant fluctuation of surrounding-cell interference over time is produced. Consequently, with the present invention, by performing fractional transmission power control taking into account the number of MU-MIMO multiplexed users, the fluctuation of received power at a radio base station apparatus per 1 RB and 1 TTI is reduced, the surrounding-cell interference is prevented from increasing, and the surrounding-cell interference is prevented from fluctuating significantly over time in adaptive resource control. As a result of this, it is possible to secure coverage without deteriorating the uplink reception quality of cell-edge users.

So, for the method of reducing the fluctuation of received power at a radio base station apparatus per 1 RB and 1 TTI, the present invention proposes two methods. The first method is a method of performing transmission power control upon MU-MIMO transmission by expanding the number of TPC command bits and using TPC commands of an expanded number of bits. Also, the second method is a method of performing fractional transmission power control by adding a term related to the number of MU-MIMO multiplexed users to the equation of fractional transmission power control (equation 1), and performing fractional transmission power control based on the resulting equation.

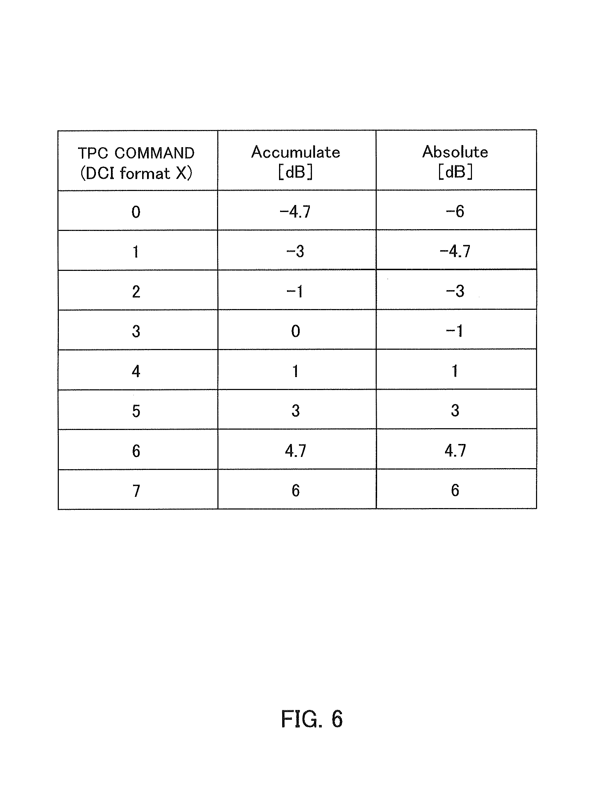

In the first method, transmission power control upon MU-MIMO transmission is realized by expanding the number of TPC command bits, which is reported from a radio base station apparatus to a mobile terminal apparatus individually through L1/L2 signaling (UL grant) via the PDCCH, and expanding the range of transmission power control. For example, as shown in FIG. 6, the DCI (Downlink Control Information) format X of the PDCCH (Physical Downlink Control Channel) of an expanded number of bits (3 bits here) is used. The selected DCI format X is reported from the radio base station apparatus to the mobile terminal apparatus through higher layer signaling.

There are two types of TPC commands, namely "Accumulate" and "Absolute," each using the format X of an expanded number of bits. Here, in the case of "Accumulate," the TPC command to transmit is set according to "the fluctuation of the number of UEs to multiplex," and, in the event of "Absolute," the TPC command is set according to "the number of UEs to multiplex." For example, in the event the number of MU-MIMO multiplexed users $N_{UE}$ changes from 1 to 2, the TPC command = -3dB is selected. Note that which one of "Accumulate" and "Absolute" is used for the TPC command, is notified from the radio base station apparatus to the mobile terminal apparatus through higher layer signaling. According to this first method, the parameters are not increased, so that it is possible to prevent the amount of signaling from increasing.

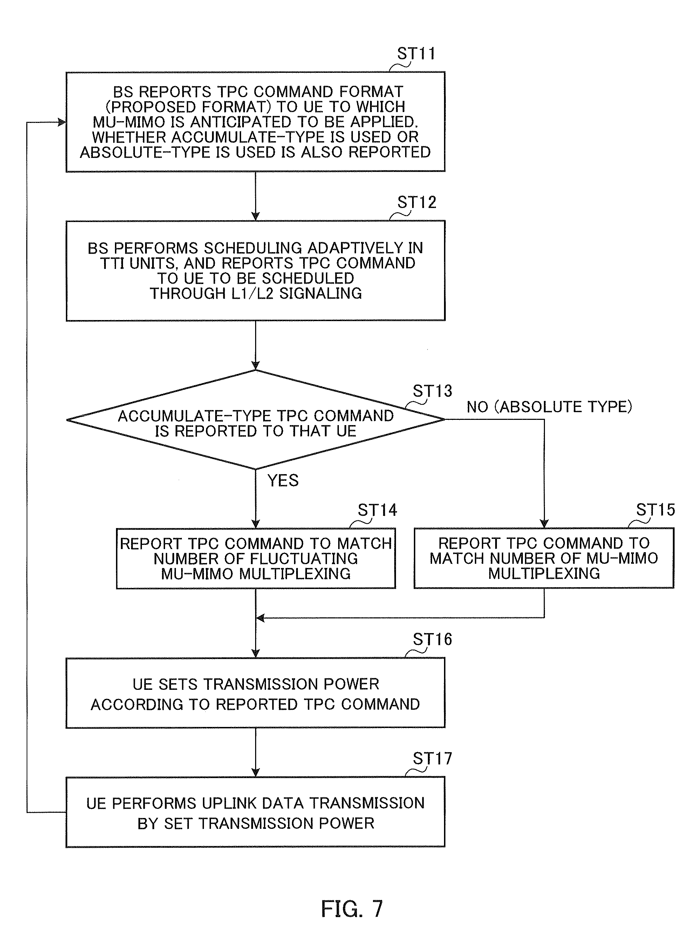

FIG. 7 is a flowchart for explaining the transmission power control of the first method according to the present invention. First, the radio base station apparatus (BS) selects the TPC command format (proposed format), and reports the selected TPC command format to a mobile terminal apparatus (UE) to which MU-MIMO transmission is anticipated to be applied, through higher layer signaling. Then, whether the TPC command is the Accumulate-type or the Absolute-type is also reported (ST11). Following this, the radio base station apparatus performs scheduling adaptively in TTI units, determines the TPC command in the selected TPC command format, and reports the TPC command to the mobile terminal apparatus to be scheduled, by L1/L2 signaling (ST12). In this case, the transmission power information is the TPC command format and TPC command.

By this means, whether the TPC command is the Accumulate-type or the TPC command is the Absolute-type, is reported to the mobile terminal apparatus (ST13). When it is reported that the TPC command is the Accumulate-type, a TPC command to match the number of fluctuating MU-MIMO multiplexing is reported from the mobile terminal apparatus to the radio base station apparatus (ST14). On the other hand, when it is reported that the TPC command is the Absolute-type, a TPC command to match the number of MU-MIMO multiplexing is reported from the radio base station apparatus (ST15). The mobile terminal apparatus sets transmission power according to the reported TPC command (ST16), and performs uplink data transmission by the set transmission power (ST17).

According to the second method, a term that relates to the number of MU-MIMO multiplexed users $N_{UE}$ (a surrounding-cell interference fluctuation correction term, which varies with the number of MU-MIMO multiplexed users) is added to the equation of fractional transmission power control (equation 1), and fractional transmission power control is performed based on that equation (following equation 2).

$$P_{PUSCH}(i)=\min\{P_{MAX}, 10\log_{10}(M_{PUSCH}(i))+P_{0\_PUSCH}(j)+\alpha\cdot PL+\Delta_{TF}(i)+f(i)$$

$$-\beta\cdot 10\log_{10}N_{UE}\}$$

$$\ldots (Equation\ 2)$$

In this way, by providing the term of $\beta\text{-}10_{log}10N_{UE}$, it is possible to reduce the fluctuation of received power at the radio base station apparatus per 1 RB and 1 TTI, and prevent the surrounding-cell interference from fluctuating significantly in adaptive resource control. As a result of this, it is possible to secure coverage without deteriorating the uplink reception quality of cell-edge users.

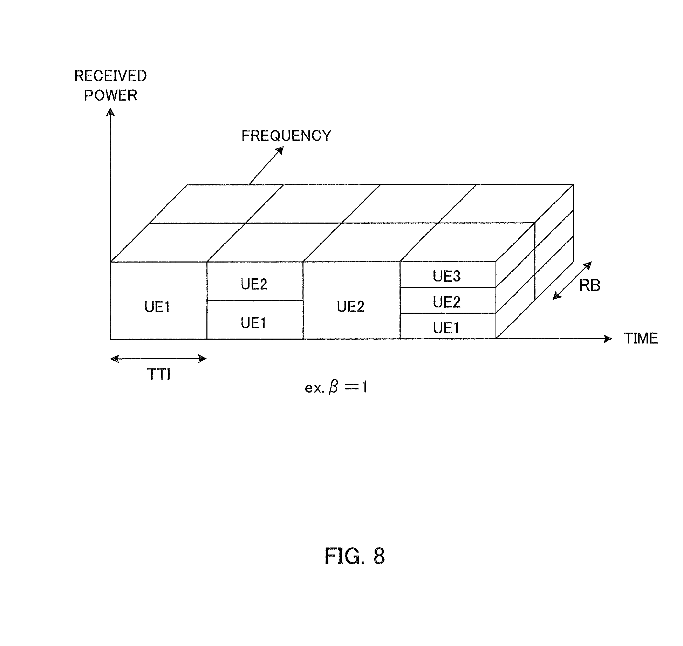

The surrounding-cell interference reduction amount can be adjusted by means of an attenuation coefficient $\beta$ ($0\leqq\beta\leqq1$) for adjusting the surrounding-cell interference reduction amount, which is included in the surrounding-cell interference fluctuation correction term. When $\beta=0$ holds, normal fractional transmission power control is performed (equation 1). When $\beta=1$ holds, as shown in FIG. 8, it is possible to make the reception level constant regardless of the number of MU-MIMO multiplexing. When $\beta=1$ is set, it is possible to reduce the fluctuation of surrounding-cell interference without increasing the amount of surrounding-cell interference regardless of the number of MU-MIMO multiplexing. In particular, there is an effect of reducing the deterioration of cell-edge user throughput (coverage). On the other hand, when $\beta=1$ holds, the effect of increasing the MU-MIMO transmission capacity is suppressed. Consequently, it is preferable to adequately set the attenuation coefficient $\beta$, taking into account the relationship between capacity and coverage ($0\leqq/\beta\leqq 1$).

The radio base station apparatus broadcasts the value of the attenuation coefficient $\beta$ via, for example, the PBCH (Physical Broadcast Channel), or reports individually, through higher layer signaling, to the mobile terminal apparatus. The setting of $\beta$ may be fixed according to the cell design policy (whether to place/not to place significance on coverage), or may be controlled dynamically according to the condition of traffic, and, for example, set low when the traffic is light or set high when the traffic is heavy. Also, the radio base station apparatus reports the value of the number of users to multiplex $N_{UE}$ to the mobile terminal apparatus, separately, through L1/L2 signaling, via the PDCCH. Then, the radio base station apparatus performs MU-MIMO scheduling according to the reception quality of the mobile terminal apparatus, and, depending on the scheduling result, adds to UL grant scheduling information. In this case, an $N_{UE}$ field needs to be added to UL grant.

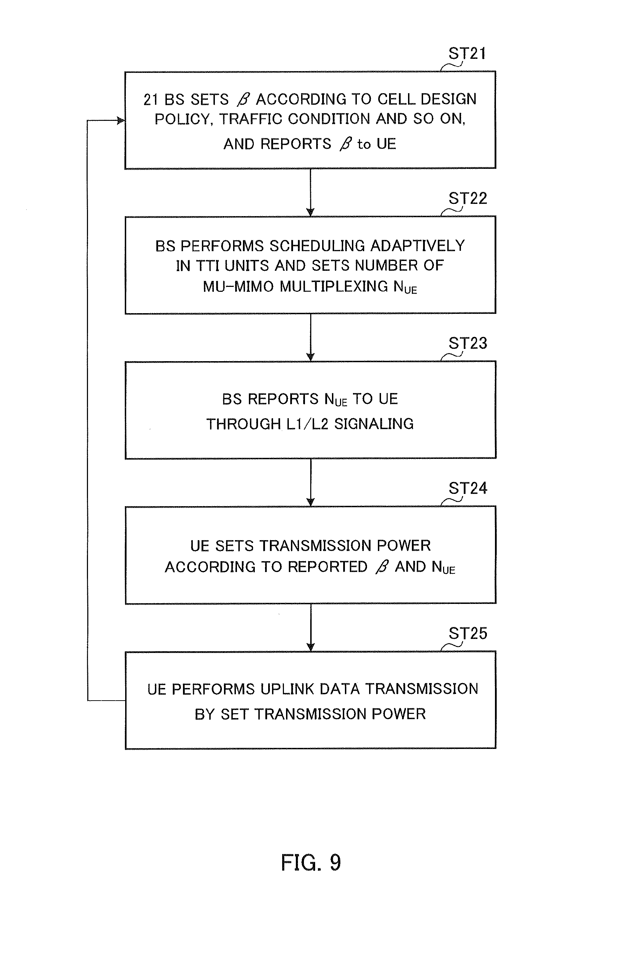

FIG. 9 is a flowchart for explaining the transmission power control of the second method according to the present invention. First, a radio base station apparatus (BS) sets the attenuation coefficient $\beta$ according to the cell design policy, the condition of traffic, and so on, and reports this attenuation coefficient $\beta$ to the mobile terminal apparatus (UE) (ST21). Following this, the radio base station apparatus performs scheduling adaptively, in TTI units, and sets the number of MU-MIMO multiplexing $N_{UE}$ (ST22). Then, the radio base station apparatus reports the number of MU-MIMO multiplexing $N_{UE}$ to the mobile terminal apparatus, through L1/L2 signaling (ST23). In this case, the transmission power information is the attenuation coefficient $\beta$ and the number of MU-MIMO multiplexing $N_{UE}$.

The mobile terminal apparatus receives the attenuation coefficient and the number of MU-MIMO multiplexing $N_{UE}$, sets transmission power according to the attenuation coefficient $\beta$ and the number of MU-MIMO multiplexing $N_{UE}$ (ST24), and performs uplink data transmission by the set transmission power (ST25).

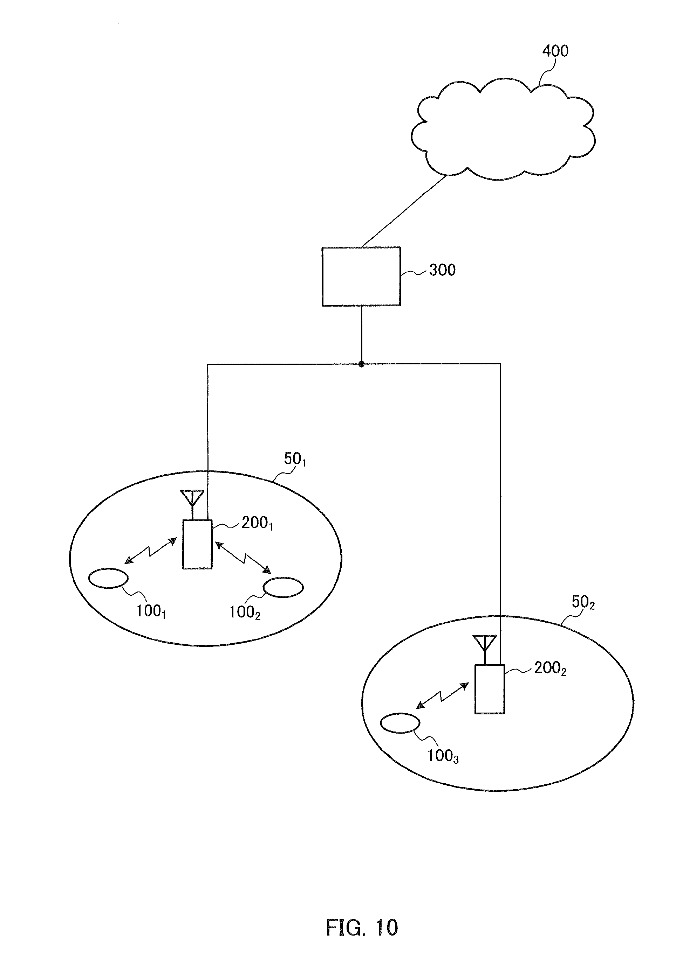

FIG. 10 is a diagram showing a configuration of a radio communication system having a radio base station apparatus and a mobile terminal apparatus according to an embodiment of the present invention.

The radio communication system is a system to adopt, for example, E-UTRA (Evolved UTRA and UTRAN). The radio communication system has a radio base station apparatus (eNB: eNodeB) 200 ($200_1$, $200_2$ ··· $200_1$, where 1 is an integer of 1>0), and a plurality of mobile terminal apparatuses (UEs) 100n ($100_1$, $100_2$, $100_3$, ··· $100_n$, where n is an integer of n>0) that communicate with the radio base station apparatus 200. The radio base station apparatus 200 is communicated with a higher station, which is, for example, an access gateway apparatus 300, and the access gateway apparatus 300 is connected with a core network 400. The mobile terminal apparatus $100_n$ communicates with a radio base station apparatus 200 in a cell 50 ($50_1$, $50_2$) by E-UTRA. Although two cells are shown with the present embodiment, the present invention is equally applicable to three or more cells as well. The mobile terminal apparatuses ($100_1$, $100_2$, $100_3$, ··· $100_n$) have the same configuration, functions and state, so that the following descriptions will be given with respect to "mobile terminal apparatus $100_n$," unless specified otherwise.

In the mobile communication system, as radio access schemes, OFDM (Orthogonal Frequency Division Multiple Access) is applied to the downlink, and SC-FDMA (Single-Carrier Frequency-Division Multiple Access) is applied to the uplink. OFDM is a multi-carrier transmission scheme to perform communication by dividing a frequency band into a plurality of narrow frequency bands (subcarriers) and mapping data to each subcarrier. SC-FDMA is a single carrier transmission scheme to reduce interference between mobile terminal apparatuses by dividing, the frequency band per terminal and allowing a plurality of terminals to use mutually different bands.

Now, the communication channels in E-UTRA will be described. On the downlink, the physical downlink shared channel (PDSCH), which is used by each mobile terminal apparatus 100n on a shared basis, and the physical downlink control channel (PDCCH) are used. The physical downlink control channel is also referred to as the downlink L1/L2 control channel. By this physical downlink shared channel, user data, that is to say, normal data signal, is transmitted. Also, by the physical downlink control channel, downlink scheduling information (DL scheduling information), delivery confirmation information (ACK/NACK), uplink scheduling grant (UL scheduling grant or UL grant), and TPC command (Transmission Power Control Command), and so on are transmitted. The downlink scheduling information includes, for example, the ID of a user communicating using the physical downlink shared channel, information about that user's data transport format (that is, data size, modulation scheme, information related to retransmission control (HARQ: Hybrid ARQ)), downlink resource block assignment information, and so on.

Furthermore, the above uplink scheduling grant includes, for example, the ID of a user communicating using the physical uplink shared channel, information about that user's data transport format (that is, data size, information about the modulation scheme, and so on), uplink resource block assignment information, information about the transmission power of the uplink shared channel, and so on. Here, an uplink resource block is equivalent to a frequency resource and may also be referred to as a resource unit.

Also, the delivery confirmation information (ACK/NACK) includes delivery confirmation information related to the uplink shared channel. The content of the delivery confirmation information is represented by either positive acknowledgment (ACK), which indicates a transmission signal has been received properly, or a negative acknowledgment (NACK), which indicates that a transmission signal has not been received properly.

On the uplink, a physical uplink shared channel (PUSCH), which is used by each mobile terminal apparatus 100n on a shared basis, and a physical uplink control channel (PUCCH) are used. By means of the above physical uplink shared channel, user data, that is to say, normal data signal, is transmitted. Also, by means of the physical uplink control channel, downlink quality information (CQI: Channel Quality Indicator) for use in the scheduling process for the shared physical channel on the downlink, adaptive modulation/demodulation and coding process (AMC: Adaptive Modulation and Coding scheme), and physical downlink shared channel delivery confirmation information, are transmitted.

In the physical uplink control channel, in addition to the CQI and delivery confirmation information, a scheduling request to request uplink shared channel resource allocation, a release request in persistent scheduling, and so on are transmitted. Here, uplink shared channel resource allocation means that the radio base station apparatus reports, using the physical downlink control channel of a given subframe, to the mobile terminal apparatus, that the mobile terminal apparatus may communicate using the uplink shared channel in a subsequent subframe.

The mobile terminal apparatus $100_n$ communicates with an optimal radio base station apparatus. In the example shown in FIG. 10, mobile terminal apparatuses $100_1$ and $100_2$ communicate with a radio base station apparatus $200_1$, and a mobile terminal apparatus $100_3$ communicates with a radio base station apparatus $200_2$. Then, as described earlier, uplink transmission by the mobile terminal apparatuses $100_1$ and $100_2$ becomes interference against the radio base station apparatus $200_2$, which is a surrounding cell. This surrounding-cell interference fluctuates significantly, because the mobile terminal apparatus to be subject to transmission allocation changes per TTI and per RB by uplink packet scheduling. Consequently, with the present invention, the radio base station apparatus $200_2$ performs fractional transmission power control, by the above first method or second method, taking into account the number of MU-MIMO multiplexed users, and reduces the fluctuation of received power at the radio base station apparatus per 1 RB and 1 TTI, prevents the surrounding-cell interference from increasing, and prevent the surrounding-cell interference from fluctuating significantly over time in adaptive resource control. As a result of this, it is possible to secure coverage without deteriorating the uplink reception quality of cell-edge users.

(Embodiment 1)

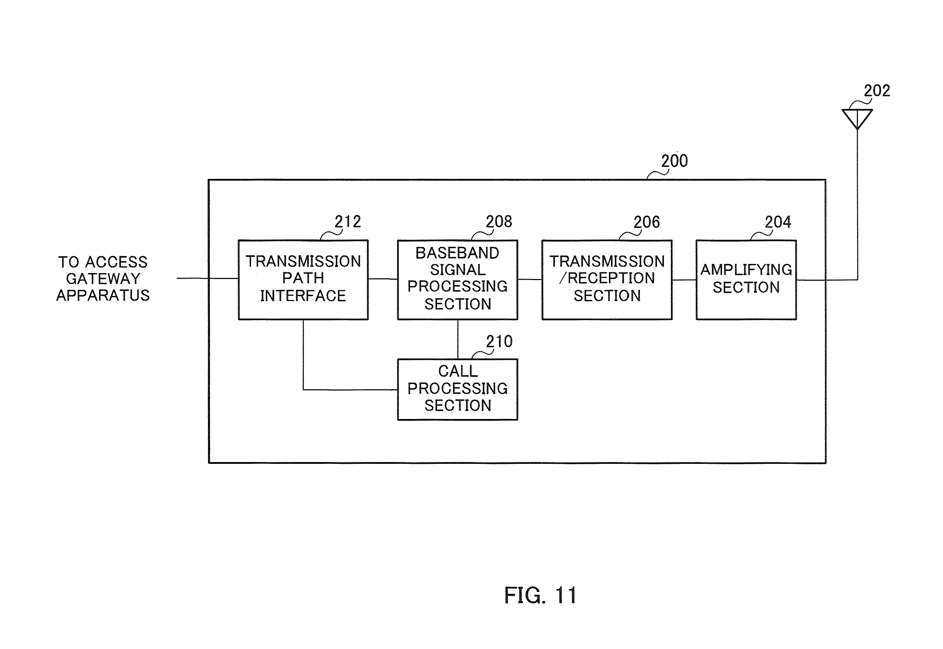

A case will be described with the present embodiment where fractional transmission power control is performed by the first method. FIG. 11 is a block diagram showing a schematic configuration of a radio base station apparatus according to an embodiment of the present invention. The radio base station apparatus 200 shown in FIG. 11 is mainly formed with an antenna 202, an amplifying section 204, a transmission/reception section 206, a baseband signal processing section 208, a call processing section 210, and a transmission path interface 212.

With the radio base station apparatus 200 configured in this way, regarding uplink data, a radio frequency signal that is received in the antenna 202 is amplified in the amplifying section 204 to correct the received power to fixed power under AGC (Auto Gain Control). The amplified radio frequency signal is subjected to frequency conversion into a baseband signal, in the transmission/reception section 206. This baseband signal is subjected to predetermined processes (error correction, decoding, and so on) in the baseband signal processing section 208, and transferred to an access gateway apparatus (not shown) via the transmission path interface 212. The access gateway apparatus is connected to the core network, and manages the mobile terminal apparatuses. Also, regarding the uplink, based on the uplink baseband signal, the received SINR and interference level of a radio frequency signal that is received in the radio base station apparatus 200 are measured.

The call processing section 210 transmits and receives a call process control signal to and from a radio control station of a higher apparatus, manages the state of the radio base station apparatus 200, and allocates resources. Note that the processes in the layer 1 processing section 2081 and MAC (Medium Access Control) processing section 2082, which will be described later, are performed based on the state of communication between the radio base station apparatus 200 and the mobile station apparatus 100 set in the call processing section 210.

Downlink data is input in the baseband signal processing section 208, from a higher station, via the transmission path interface 212. In the baseband signal processing section 208, the retransmission control process, scheduling, transport format selection, channel coding and so on are performed, and the result is transferred to the transmission/ reception section 206. The transmission/reception section 206 performs frequency conversion of the baseband signal output from the baseband signal processing section 208, into a radio frequency signal. The signal subjected to frequency conversion is later amplified in the amplifying section 204 and transmitted from the antenna 202.

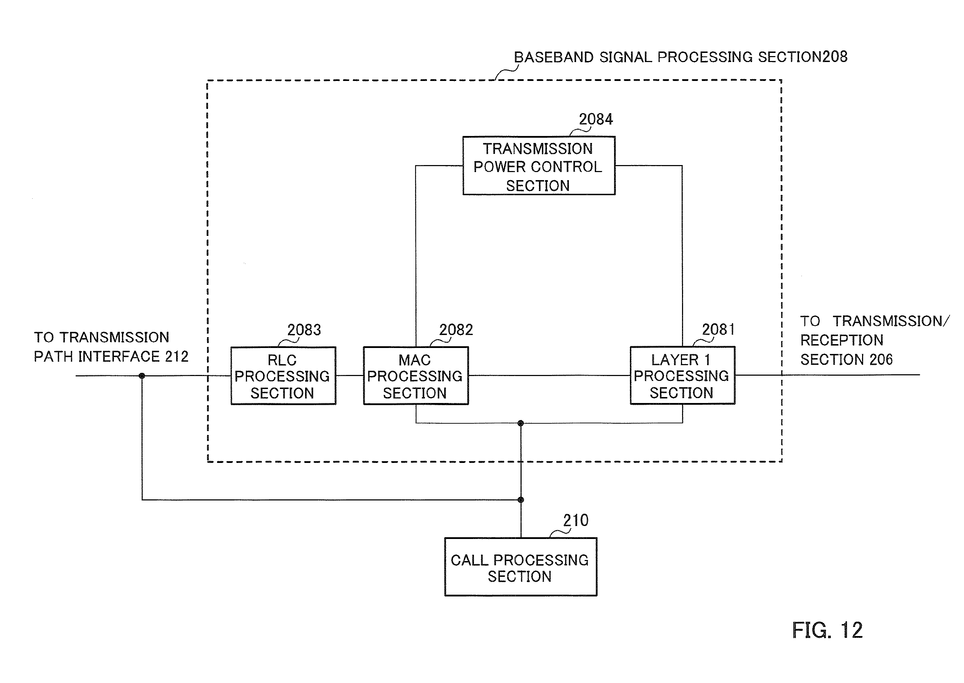

FIG. 12 is a block diagram showing a configuration of a baseband signal processing section in the radio base station apparatus shown in FIG. 11. The baseband signal processing section 208 is mainly formed with a layer 1 processing section 2081, a MAC processing section 2082, an RLC (Radio Link Control) processing section 2083, and a transmission power control section 2084.

The layer 1 processing section 2081 mainly performs processes related to the physical layer. The layer 1 processing section 2081, for example, performs processes for a signal that is received on the uplink, including channel decoding, Discrete Fourier Transform (DFT), frequency demapping, and Inverse Fast Fourier Transform (IFFT), data demodulation and so on. Also, the layer 1 processing section 2081 performs processes for a signal to transmit on the downlink, including channel coding, data modulation, frequency mapping and Inverse Fast Fourier Transform (IFFT).

The MAC processing section 2082 performs processes for the signal received on the uplink, such as retransmission control in the MAC layer, scheduling for the uplink/downlink, transport format selection for the PUSCH/PDSCH, resource block selection for the PUSCH/PDSCH, and so on.

The RLC processing section 2083 performs, for a packet received on the uplink/a packet to transmit on the downlink, packet division, packet combining, retransmission control in the RLC layer and so on.

Upon uplink MU-MIMO transmission, the transmission power control section 2084 controls transmission power according to the number of MU-MIMO multiplexed users.

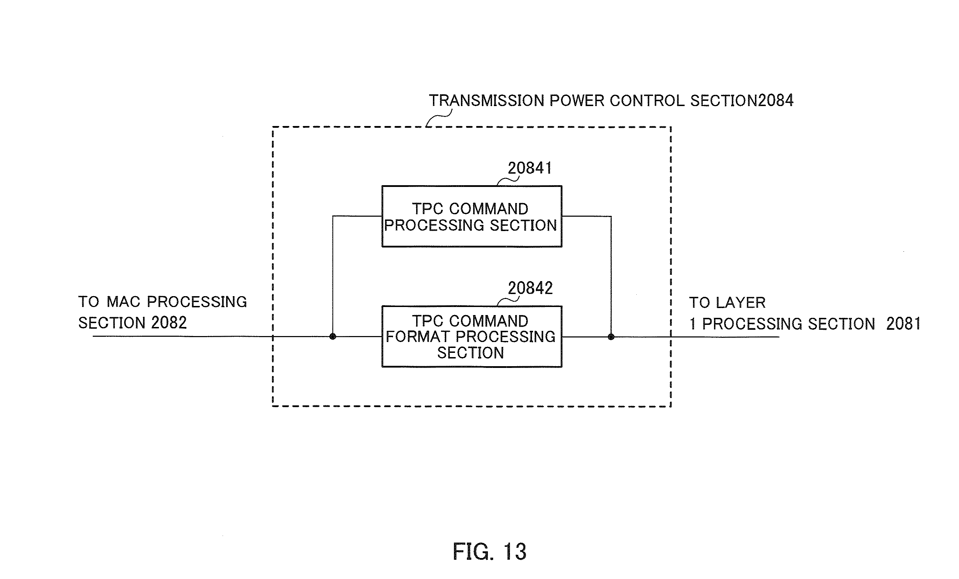

FIG. 13 is a block diagram showing a configuration of the transmission power control section according to embodiment 1, in the baseband signal processing section 208 shown in FIG. 12. The transmission power control section 2084 is mainly formed with a TPC command processing section 20841 and a TPC command format processing section 20842.

Upon MU-MIMO transmission, the TPC command processing section 20841 generates a TPC command to match the number of MU-MIMO multiplexed users, the number of fluctuating MU-MIMO multiplexed users and so on. This TPC command is generated based on the TPC command format selected in the TPC command format processing section 20842 (TPC command format with an expanded number of bits). On the other hand, in the event MU-MIMO transmission is not involved, the TPC command defined in the LTE system is generated. This TPC command is generated based on the TPC command format selected in the TPC command format processing section 20842 (TPC command format defined in the LTE system). These TPC commands are separately reported to the mobile terminal apparatus through L1/L2 signaling (UL grant) via the PDCCH.

The TPC command format processing section 20842 selects the TPC command format (the Accumulate-type or the Absolute-type), and selects the TPC command format with an expanded number of bits such as shown in FIG. 6 or the TPC command format defined in the LTE system. Information about this TPC command format is reported to the mobile terminal apparatus through higher layer signaling. By this means, transmission power information (the TPC command and the TPC command format) to match the number of MU-MIMO multiplexed users is transmitted from the radio base station apparatus to the mobile terminal apparatus.

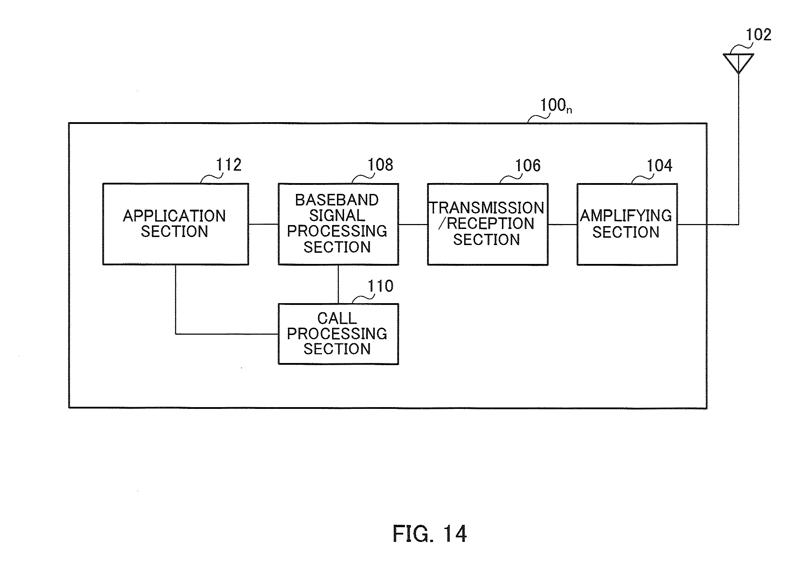

FIG. 14 is a block diagram showing a schematic configuration of a mobile terminal apparatus according to an embodiment of the present invention. The mobile terminal apparatus 100 shown in FIG. 14 is mainly formed with an antenna 102, an amplifying section 104, a transmission/reception section 106, a baseband signal processing section 108, a call processing section 110, and an application section 112.

With the mobile terminal apparatus 100 configured in this way, regarding downlink data, a radio frequency signal that is received in the antenna 102 is amplified in the amplifying section 104 to correct the received power to fixed power under AGC. The amplified radio frequency signal is subjected to frequency conversion into a baseband signal, in the transmission/reception section 106. This baseband signal is subjected to predetermined processes (error correction, decoding, and so on) in the baseband signal processing section 108, and sent to the call processing section 110 and application section 112. The call processing section 110 manages communication with the radio base station apparatus 200, and the application section 112 performs processes related to layers higher than the physical layer or the MAC layer.

Uplink data is input in the baseband signal processing section 108, from the application section 112. In the baseband signal processing section 208, the retransmission control process, scheduling, transport format selection, channel coding and so on are performed, and the result is transferred to the transmission/reception section 106. The transmission/reception section 206 performs frequency conversion of the baseband signal output from the baseband signal processing section 108, into a radio frequency signal. The signal subjected to frequency conversion is later amplified in the amplifying section 104 and transmitted from the antenna 102.

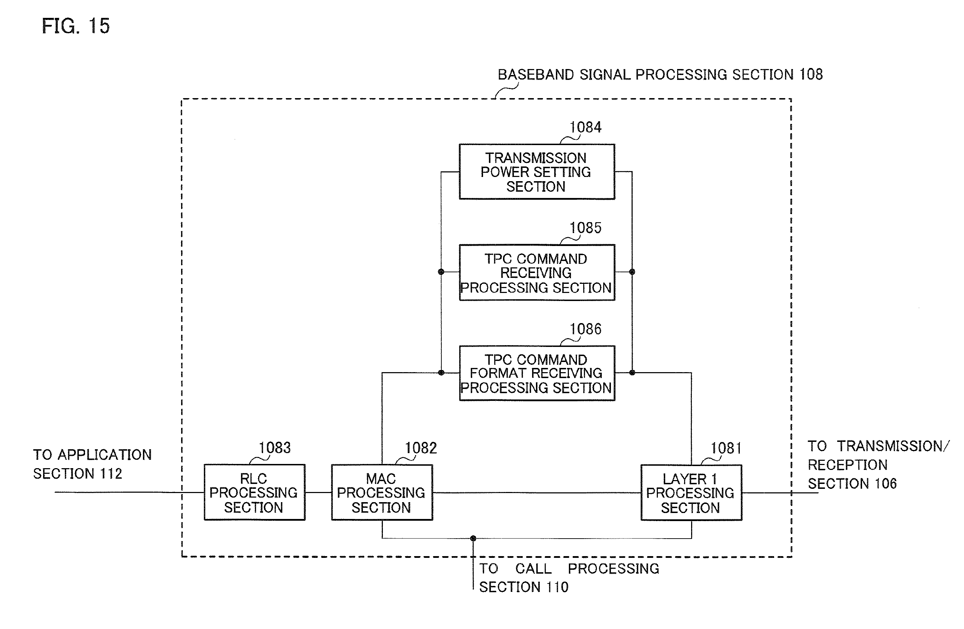

FIG. 15 is a block diagram showing a configuration of a baseband signal processing section according to embodiment 1 of the mobile terminal apparatus shown in FIG. 14. The baseband signal processing section 108 is mainly formed with a layer 1 processing section 108, a MAC processing section 1082, a RLC processing section 1083, a transmission power setting section 1084, a TPC command receiving processing section 1085, and a TPC command format receiving processing section 1086.

The layer 1 processing section 1081 mainly performs processes related to the physical layer. The layer 1 processing section 1081, for example, performs processes for a signal that is received on the dplink, including channel decoding, Discrete Fourier Transform, frequency demapping, Inverse Fast Fourier Transform, data demodulation and so on. Also, the layer 1 processing section 1081 performs processes for a signal to transmit on the uplink, including channel coding, data modulation, frequency mapping and Inverse Fast Fourier Transform (IFFT).

The MAC processing section 1082 performs retransmission control in the MAC layer (HARQ), analysis of downlink scheduling information (specifying the PDSCH transport format, specifying the PDSCH resource blocks, and so on) and so on, for a signal received on the downlink. Also, the MAC processing section 1082 performs MAC retransmission control, analysis of uplink scheduling information (specifying the PUSCH transport format, specifying the PUSCH resource blocks, and so on) and so on, for a signal to transmit on the uplink.

The RLC processing section 1083 performs, for a packet received on the uplink/a packet to transmit on the downlink, packet division, packet combining, retransmission control in the RLC layer and so on.

The TPC command receiving processing section 1085 receives a TPC command to match the number of MU-MIMO multiplexed users reported from the radio base station apparatus, and determines the content of that TPC command. The TPC command receiving processing section 1085 determines the content of the TPC command based on the TPC command format received in the TPC command format receiving processing section 1086. Consequently, upon uplink MU-MIMO transmission, the TPC command receiving processing section 1085 determines the content of the TPC command based on the TPC command format (FIG. 6) with an expanded number of bits (for example, 3 bits). Also, in the event uplink MU-MIMO transmission is not involved, the TPC command receiving processing section 1085 determines the content of the TPC command based on the TPC command format defined in the LTE system (2 bits). Information of the TPC command is set to the transmission power setting section 1084.

The TPC command format receiving processing section 1086 receives a signal of the TPC command format, reported from the radio base station apparatus. Consequently, upon uplink MU-MIMO transmission, the TPC command format receiving processing section 1086 receives a signal of the TPC command format (FIG. 6) of an expanded number of bits (for example, 3 bits). Also, in the event uplink MU-MIMO transmission is not involved, the TPC command format receiving processing section 1086 receives a signal of the TPC command format defined in the LTE system. Information of the TPC command format is sent to the transmission power setting section 1084.

The transmission power setting section 1084 sets transmission power using the transmission power control information (TPC command format and TPC command). That is to say, upon uplink MU-MIMO transmission, transmission power is set using the TPC command format (FIG. 6) of an expanded number of bits (for example, 3 bits) and TPC command. Also, in the event uplink MU-MIMO transmission is not involved, the transmission power setting section 1084 sets transmission power using the TPC command format and TPC command defined in the LTE system.

In this radio communication system, a radio base station apparatus, which performs space division multiplexing between users by multi-user MIMO transmission, controls transmission power according to the number of MU-MIMO multiplexed users, and transmits transmission power information to match the number of MU-MIMO multiplexed users, and a mobile terminal apparatus sets transmission power using transmission power information and transmits an uplink signal by that transmission power.

That is to say, upon MU-MIMO transmission, the radio base station apparatus selects the TPC command format (the format with an expanded number of bits), and reports the selected TPC command format to a mobile terminal apparatus to which MU-MIMO transmission is anticipated to be applied, through higher layer signaling. Then, together, whether the TPC command is the Accumulate-type or the Absolute-type is also reported. Following this, the radio base station apparatus performs scheduling adaptively in TTI units, determine the TPC command in the selected TPC command format, and reports the TPC command to the mobile terminal apparatus to be scheduled, by L1/L2 signaling.

In the mobile terminal apparatus, a TPC command to match the number of fluctuating MU-MIMO multiplexing or the number of MU-MIMO multiplexing is reported from the radio base station apparatus. The mobile terminal apparatus sets transmission power according to the reported TPC command, and performs uplink data transmission by the set transmission power.

(Embodiment 2)

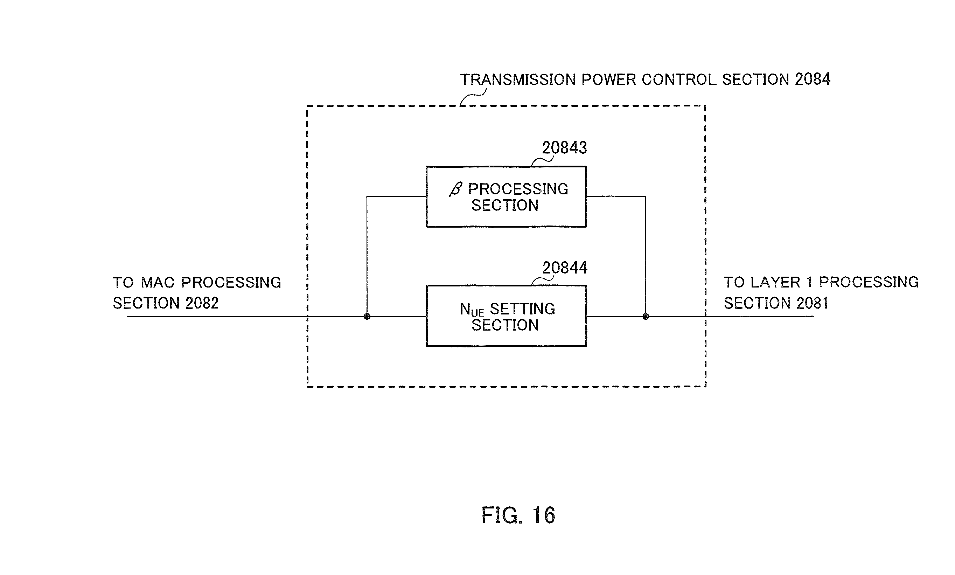

A case will be described with the present embodiment where fractional transmission power control is performed by the second method. FIG. 16 is a block diagram showing configuration of transmission power control section according to embodiment 2 of baseband signal processing section 208 shown in FIG. 12. Note that the configurations of the radio base station apparatus shown in FIG. 11 and FIG. 12 are the same as in embodiment 1 and will not be described in detail.

The transmission power control section 2084 is mainly formed with a $\beta$ processing section 20843 and a $N_{UE}$ setting section 20844.

The $\beta$ processing section 20843 generates attenuation coefficient $\beta$ ($0 \leqq \beta \leqq 1$). This attenuation coefficient $\beta$ is set as appropriate taking into account the relationship between capacity and coverage. In the event MY-MIMO transmission is applied, if significance is placed on coverage, $\beta=1$ is set. In the event MU-MIMO transmission is not applied, $\beta=0$ is set (fractional transmission power control in the LTE system). The attenuation coefficient $\beta$ may be reported via the PBCH or may be reported separately through higher layer signaling.

The $N_{UE}$ processing section 20844 performs scheduling according to the reception quality of the mobile terminal apparatus, in the same way as by the MAC processing section 2082, and sets the number of MU-MIMO multiplexing $N_{UE}$. The value of the number of MU-MIMO multiplexing $N_{UE}$ is reported separately by L1/L2 signaling, via the PDCCH.

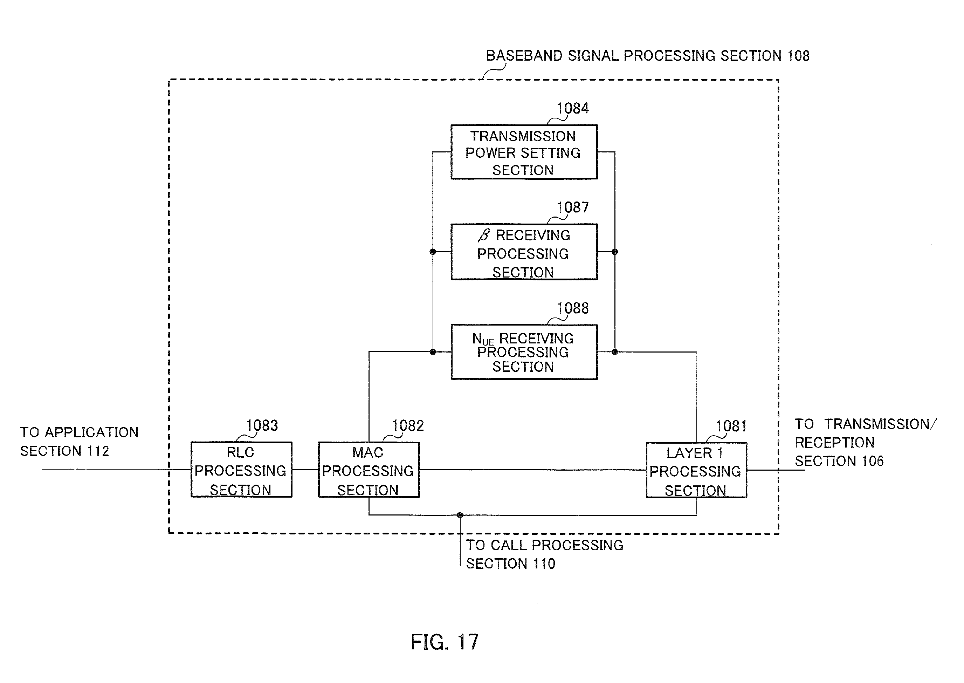

FIG. 17 is a block diagram showing a configuration of a baseband signal processing section according to embodiment 2, in the mobile terminal apparatus shown in FIG. 14. Components in FIG. 17 that are the same as in FIG. 14 will be assigned the same codes as in FIG. 14 and their detailed descriptions will be omitted. The baseband signal processing section 108 is mainly formed with a layer 1 processing section 1081, a MAC processing section 1082, an RLC processing section 1083, a transmission power setting section 1084, a $\beta$ receiving processing section 1087, and an $N_{UE}$ receiving processing section 1088.

Upon uplink MU-MIMO transmission, the $\beta$ receiving processing section 1087 receives an attenuation coefficient $\beta$ reported from the radio base station apparatus, and determines its content. Information about the attenuation coefficient $\beta$ is sent to the transmission power setting section 1084.

Upon uplink MU-MIMO transmission, the $N_{UE}$ receiving processing section 1088 receives a signal of the number of MU-MIMO multiplexing $N_{UE}$ that is reported from the radio base station apparatus, and determines its content. Information about the number of MU-MIMO multiplexing $N_{UE}$ is sent to the transmission power setting section 1084.

The transmission power setting section 1084 sets transmission power using transmission power control information (the attenuation coefficient $\beta$ and the number of MU-MIMO multiplexing $N_{UE}$). That is to say, upon uplink MU-MIMO transmission, transmission power is set, according to above equation 2, using the attenuation coefficient $\beta$ and the number of MU-MIMO multiplexing $N_{UE}$. Also, the transmission power setting section 1084 sets transmission power according to above equation 1 in the event uplink MU-MIMO transmission is not involved.

In this radio communication system, a radio base station apparatus, which performs space division multiplexing between users by multi-user MIMO transmission, controls transmission power according to the number of MU-MIMO multiplexed users, and transmits transmission power information to match the number of MU-MIMO multiplexed users, and a mobile terminal apparatus sets transmission power using transmission power information and transmits an uplink signal by that transmission power.

That is to say, upon MU-MIMO transmission, the radio base station apparatus sets the attenuation coefficient $\beta$ according to the cell design policy, traffic conditions, and so on, and broadcasts this attenuation coefficient $\beta$ to the mobile terminal apparatus (UE). Next, the radio base station apparatus performs scheduling adaptively in TTI units, and sets the number of MU-MIMO multiplexing $N_{UE}$. Then, the radio base station apparatus reports the number of MU-MIMO multiplexing $N_{UE}$ to the mobile terminal apparatus through L1/L2 signaling.

The mobile terminal apparatus receives the attenuation coefficient $\beta$ and the number of MU-MIMO multiplexing $N_{UE}$, sets transmission power according to the attenuation coefficient $\beta$ and the number of MU-MIMO multiplexing $N_{UE}$, and performs uplink data transmission by that set transmission power.

Also, the embodiments disclosed herein are only examples in all respects, and are by no means limited to these embodiments. The scope of the present invention is defined not only by the descriptions of the above embodiments and also is set by the claims, and covers all the modifications and alterations within the meaning and range equivalent to the claims.

Industrial Applicability

The present invention is suitable for use for a radio base station apparatus and a transmission power control method in the LTE system.

The disclosure of Japanese Patent Application No. 2010-087266, filed on April 5, 2010, including the specification, drawings, and abstract, is incorporated herein by reference in its entirety.

**Claims**

1. A radio base station apparatus that performs space division multiplexing between users by uplink MU-MIMO transmission, the radio base station apparatus comprising:

   a transmission power control section configured to control transmission power according to a number of MU-MIMO multiplexed users; and
   a transmission section configured to transmit transmission power information to match the number of MU-MIMO multiplexed users.

2. The radio base station apparatus as defined in claim 1, wherein the transmission power control section comprises:

   a format selection section configured to select a transmission power control command format; and
   a command determining section configured to determine a transmission power control command in the selected transmission power control command format.

3. The radio base station apparatus as defined in claim 2, wherein the transmission section transmits the transmission power control command format and the transmission power control command as the transmission power information.

4. The radio base station apparatus as defined claim 1, wherein the transmission power control section performs fractional transmission power control based on an equation including a surrounding-cell interference fluctuation correction term that varies with the number of MU-MIMO multiplexed users.

5. The radio base station apparatus as defined in claim 4, wherein the surrounding-cell interference fluctuation correction term includes an attenuation coefficient that adjusts a surrounding-cell interference reduction amount.

6. The radio base station apparatus as defined in claim 5, wherein the transmission section transmits the number of MU-MIMO multiplexed users and the attenuation coefficient as the transmission power information.

7. A transmission power control method comprising the steps of:

   in a radio base station apparatus that performs space division multiplexing between users by uplink MU-MIMO transmission:

controlling transmission power according to a number of MU-MIMO multiplexed users; and
transmitting transmission power information to match the number of MU-MIMO multiplexed users; and
in a mobile terminal apparatus:

setting transmission power using the transmission power information; and
transmitting an uplink signal by the transmission power.

8. The transmission power control method as defined in claim 7, further comprising the steps of:

in the radio base station apparatus:

selecting a transmission power control command format; and
determining a transmission power control command in the selected transmission power control command format.

9. The transmission power control method as defined in claim 8, wherein the transmission power information is the transmission power control command format and the transmission power control command.

10. The transmission power control method as defined in claim 7, further comprising the step of:

in the radio base station apparatus:

performing fractional transmission power control based on an equation including a surrounding-cell interference fluctuation correction term that varies with the number of MU-MIMO multiplexed users.

11. The transmission power control method as defined in claim 10, wherein the surrounding-cell interference fluctuation correction term includes an attenuation coefficient that adjusts a surrounding-cell interference reduction amount.

12. The transmission power control method as defined in claim 11, wherein the transmission power information is the number of MU-MIMO multiplexed users and the attenuation coefficient.

FIG. 1

PUSCH/PUCCH/SRS
INTERFERENCE SIGNAL

BS2
UE2
UE1
BS1

TARGET RECEIVED POWER

LTE

INCLINATION : $-(1 - \alpha)$

$P_{0\_PUSCH}$

0

PROPAGATION LOSS : PL

USER NEAR BASE STATION

USER AT CELL EDGE

FIG. 2

EP 2 557 861 A1

FIG. 3

DESIRED SIGNAL

INTERFERENCE SIGNAL

FIG. 4

FIG. 5

| TPC COMMAND (DCI format X) | Accumulate [dB] | Absolute [dB] |
|---|---|---|
| 0 | −4.7 | −6 |
| 1 | −3 | −4.7 |
| 2 | −1 | −3 |
| 3 | 0 | −1 |
| 4 | 1 | 1 |
| 5 | 3 | 3 |
| 6 | 4.7 | 4.7 |
| 7 | 6 | 6 |

FIG. 6

ST11

BS REPORTS TPC COMMAND FORMAT
(PROPOSED FORMAT) TO UE TO WHICH
MU-MIMO IS ANTICIPATED TO BE APPLIED.
WHETHER ACCUMULATE-TYPE IS USED OR
ABSOLUTE-TYPE IS USED IS ALSO REPORTED

ST12

BS PERFORMS SCHEDULING ADAPTIVELY IN
TTI UNITS, AND REPORTS TPC COMMAND
TO UE TO BE SCHEDULED
THROUGH L1/L2 SIGNALING

ST13

ACCUMULATE-TYPE TPC COMMAND
IS REPORTED TO THAT UE

NO (ABSOLUTE TYPE)

YES

ST14

REPORT TPC COMMAND TO MATCH
NUMBER OF FLUCTUATING
MU-MIMO MULTIPLEXING

ST15

REPORT TPC COMMAND TO
MATCH NUMBER OF MU-MIMO
MULTIPLEXING

ST16

UE SETS TRANSMISSION POWER
ACCORDING TO REPORTED TPC COMMAND

ST17

UE PERFORMS UPLINK DATA TRANSMISSION
BY SET TRANSMISSION POWER

FIG. 7

RECEIVED
POWER

FREQUENCY

UE2

UE1

UE2

UE3

UE2

UE1

UE1

RB

TIME

TTI

ex. $\beta = 1$

FIG. 8

**FIG. 9**

FIG. 10

EP 2 557 861 A1

```
                                                                            202
                                                                            ▽

                                              200

              212              208              206              204
    TO ACCESS   TRANSMISSION   BASEBAND        TRANSMISSION    AMPLIFYING
    GATEWAY     PATH           SIGNAL          /RECEPTION      SECTION
    APPARATUS   INTERFACE      PROCESSING      SECTION
                               SECTION

                                   210
                               CALL
                               PROCESSING
                               SECTION
```

FIG. 11

BASEBAND SIGNAL PROCESSING SECTION208

TRANSMISSION POWER CONTROL SECTION — 2084

TO TRANSMISSION PATH INTERFACE 212

RLC PROCESSING SECTION — 2083

MAC PROCESSING SECTION — 2082

LAYER 1 PROCESSING SECTION — 2081

TO TRANSMISSION/ RECEPTION SECTION 206

CALL PROCESSING SECTION — 210

FIG. 12

TRANSMISSION POWER CONTROL SECTION 2084

20841

TPC COMMAND
PROCESSING SECTION

20842

TO MAC PROCESSING
SECTION 2082

TPC COMMAND
FORMAT PROCESSING
SECTION

TO LAYER
1 PROCESSING SECTION 2081

FIG. 13

EP 2 557 861 A1

$100_n$

112

APPLICATION
SECTION

108

BASEBAND
SIGNAL
PROCESSING
SECTION

106

TRANSMISSION
/RECEPTION
SECTION

104

AMPLIFYING
SECTION

102

110

CALL
PROCESSING
SECTION

FIG. 14

# FIG. 15

BASEBAND SIGNAL PROCESSING SECTION 108

**1084**
TRANSMISSION
POWER SETTING
SECTION

**1085**
TPC COMMAND
RECEIVING
PROCESSING SECTION

**1086**
TPC COMMAND
FORMAT RECEIVING
PROCESSING SECTION

TO APPLICATION
SECTION 112

**1083**
RLC
PROCESSING
SECTION

**1082**
MAC
PROCESSING
SECTION

**1081**
LAYER 1
PROCESSING
SECTION

TO  TRANSMISSION/
RECEPTION
SECTION 106

TO  CALL  PROCESSING
SECTION 110

TRANSMISSION POWER CONTROL SECTION 2084

20843

$\beta$ PROCESSING SECTION

20844

$N_{UE}$ SETTING SECTION

TO MAC PROCESSING SECTION 2082

TO LAYER 1 PROCESSING SECTION 2081

FIG. 16

FIG. 17

<div style="text-align:center">**INTERNATIONAL SEARCH REPORT**</div>

| | International application No. |
|---|---|
| | PCT/JP2011/057965 |

**A. CLASSIFICATION OF SUBJECT MATTER**
*H04W52/18*(2009.01)i, *H04W16/28*(2009.01)i, *H04W52/08*(2009.01)i

According to International Patent Classification (IPC) or to both national classification and IPC

**B. FIELDS SEARCHED**

Minimum documentation searched (classification system followed by classification symbols)
H04W52/18, H04W16/28, H04W52/08

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-74740 A  (NTT Docomo Inc.), 02 April 2010 (02.04.2010), paragraphs [0040] to [0047] & WO 2010/032774 A1 | 1-12 |
| A | JP 2010-507980 A  (Alcatel-Lucent USA Inc.), 11 March 2010 (11.03.2010), paragraphs [0042] to [0093] & US 2008/0101310 A1     & EP 2078348 A & WO 2008/057197 A1     & KR 10-2009-0058582 A | 1-12 |
| A | JP 2009-232041 A  (Fujitsu Ltd.), 08 October 2009 (08.10.2009), abstract (Family: none) | 1-12 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 April, 2011 (19.04.11) | 26 April, 2011 (26.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 557 861 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010087266 A